(19) Europäisches Patentamt
European Patent Office
Office européen des brevets

(11) **EP 2 647 749 A1**

(12) **EUROPEAN PATENT APPLICATION**
published in accordance with Art. 153(4) EPC

(43) Date of publication:
**09.10.2013 Bulletin 2013/41**

(51) Int Cl.:
**D03D 11/00** (2006.01)   **D03D 3/02** (2006.01)
**D03D 25/00** (2006.01)   **H01B 17/58** (2006.01)

(21) Application number: **11845756.3**

(22) Date of filing: **22.11.2011**

(86) International application number:
**PCT/JP2011/076903**

(87) International publication number:
**WO 2012/073757 (07.06.2012 Gazette 2012/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.11.2010   JP 2010264756**

(71) Applicant: **Toray Industries, Inc.**
**Tokyo 103-8666 (JP)**

(72) Inventors:
• **FURUTA, Takahiro**
**Osaka 5308222 (JP)**
• **TSUCHIKURA, Hiroshi**
**Shiga 5202141 (JP)**

(74) Representative: **Webster, Jeremy Mark et al**
**Mewburn Ellis LLP**
**33 Gutter Lane**
**London**
**EC2V 8AS (GB)**

(54) **FABRIC AND COVERING MATERIAL FOR ELECTRICAL WIRING USING SAME**

(57)   The present invention is a two- or more ply flat woven textile in which a texture A comprising a yarn A and a texture B comprising a yarn B are interwoven, wherein the yarn A and the yarn B are both a warp yarn or both a weft yarn, and shrinkage percentage of the yarn A (SA (%)) and shrinkage percentage of the yarn B (SB (%)) satisfies a specific range. The woven textile of the present invention, when heat is applied, is spontaneously formed into a tube with a sufficient overlap in the circumferential direction. This tube provides easy insertion of lead wires and is able to protect the lead wires reliably without exposing the inserted lead wires.

[Fig. 2]

**Description**

TECHNICAL FIELD

The present invention relates to a woven textile and a protective sleeve for a wire harness using the same.

BACKGROUND ART

Conventionally, in processing a flat woven textile into a tube, the method in which a woven textile is set at a tubular metal mold and formed into a tube by heat set has been generally used. To form a woven textile into a tube using this processing method, a technique in heat set is required and besides the processing cost is high; therefore, it is difficult to provide a tube at low cost.
With increasing use of electrical appliances, the amount of wire used increases, and accordingly the amount of protective sleeve for a wire harness used tends to increase. Protective sleeves for a wire harness are classified into two types: the open type having a slit in the longer direction and the closed type having a complete tubular shape. In the case of the closed type, the operation of attaching or detaching a lead wire must be performed from an opening at either one end, and therefore the operating efficiency is low. Thus, the open-type is preferably used. However, the open-type requires tube formation using a metal mold or half wrapping using adhesive tape, and, in addition, lead wires can be exposed after protection due to a slit opening.
Thus, a protective sleeve for a wire harness obtained by attaching a ring to an open- type protective sleeve to prevent the opening of a slit has been proposed (Patent Document 1) .
Further, as a tapeless protective sleeve for a wire harness, a method of obtaining a tubular open- type protective sleeve by laminating two sheets has been proposed (Patent Document 2) . This method allows production of a protective sleeve for a wire harness that does not use a tape or a ring.
Further, a protective sleeve for a wire harness that has an improved abrasion resistance by arranging a monofilament and a multifilament for warp and weft has been proposed (Patent Document 3) .

PRIOR ART DOCUMENTS

PATENT DOCUMENTS

Patent Document 1: JP 06-70425 A
Patent Document 2: JP 2007-297749 A
Patent Document 3: WO 2009/111253

SUMMARY OF THE INVENTION

PROBLEMS TO BE SOLVED BY THE INVENTION

However, the method of Patent Document 1 does not improve cost- effectiveness or operability sufficiently, because the number of rings to attach increases when wires are long or a pathway has many curves.
The method of Patent Document 2 does not improve cost-effectiveness or operability sufficiently, because, after providing two sheets, one sheet A is stretched, and the other sheet B must be laminated in the stretched state less than or equal to the sheet A or unstretched state.
In the method of Patent Document 3, a tube is formed by heat-curing a flat woven textile in the tubular state or applying tension to a yarn in the process for weaving a woven textile. As mentioned above, such a heat set technique is difficult to implement and requires a high processing cost, and besides the operability for protecting a long and thin member is very poor.
An object of the present invention is to solve such problems of the prior art, and the present invention provides a protective sleeve for a wire harness that can reduce the production cost, has an unprecedented excellent operability, further has excellent softness, flexibility, and the like, and can easily provide functions such as heat-resisting property and flame resistance, and a woven textile used therefor.

MEANS FOR SOLVING THE PROBLEMS

The woven textile of the present invention is a two- or more ply flat woven textile in which a texture A comprising a yarn A and a texture B comprising a yarn B are interwoven,
wherein the yarn A and the yarn B are both a warp yarn or both a weft yarn; shrinkage percentage of the yarn A (SA (%)) and shrinkage percentage of the yarn B (SB (%)) satisfy Relation (1) below; and
the woven textile, when heat is applied thereto, is formed into a tube such that the longer direction of the yarn A and the yarn B is the circumferential direction and the texture A is located outside the texture B:

$$10\% < (SB - SA) < 60\% \qquad (1).$$

The process for producing a tubular woven textile of the present invention is a process for producing a tubular woven textile,
wherein heat is applied to the woven textile of the present invention, so that the woven textile spontaneously rolls up due to the difference in shrinkage percentage between the yarn A and the yarn B to form a tube;
the longer direction of the yarn A and the yarn B is the circumferential direction of the tube;
the texture A is located outside the texture B; and
one end and the opposite end of the woven textile separably overlap each other on the circumference of the tube, wherein the length of the overlapping portion in the circumferential direction is 2% or more of the circumferential length.
The tubular woven textile of the present invention is a tubular woven textile formed in such a manner that a flat two-ply woven textile in which a front surface texture and a back surface texture are interwoven is rolled up such that the front surface texture is located outside,
wherein one end and the opposite end of the two-ply woven textile separably overlap each other on the circumference of the tube; and
in the tubular state described above, the circumferential length of a yarn arranged in the front surface texture (LA) and the circumferential length of a yarn arranged in the back surface texture (LB) satisfy Relation (3) below:

$$10\% < \{(LA - LB)/LA\} \times 100 < 60\% \qquad \text{Relation (3)}.$$

The protective sleeve for a wire harness of the present invention uses the tubular woven textile obtained by the process for producing a tubular woven textile of the present invention or uses the tubular woven textile of the present invention.

EFFECTS OF THE INVENTION

The woven textile of the present invention is spontaneously formed into a tube by utilizing the difference in shrinkage between yarns caused when heat is applied, and, therefore, heat set using a metal mold or half wrapping using adhesive tape is not required. Thus, the cost of production of a tubular woven textile can be reduced.
In addition, when a tube with a sufficient overlap in the circumferential direction is formed by adjusting the conditions of heat to be applied, lead wires inserted into the woven textile will not be exposed from the tube due to the overlap, and the lead wires can be protected sufficiently.
Further, to form the woven textile of the present invention into a tube, it is not necessary to use a metal mold, and the woven textile of the present invention is formed into a tube only by simple heating immediately before being used, for example, in a factory where the tube is used. Thus, the woven textile of the present invention can be shipped as a flat woven textile before being formed into a tube, and can be efficiently transported. Furthermore, the woven textile can be stored in a small space compared to a tube in the same amount because it can be stored in piles.

BRIEF DESCRIPTION OF THE DRAWINGS

FIG. 1 is a weaving design of the two-ply woven textile of the present invention;
FIG. 2 is a schematic view illustrating the arrangement of a warp yarn and a weft yarn in the woven textile of FIG. 1 seen from the longer direction of the weft yarn (the direction of arrow I);
FIG. 3 is a weaving design of the three-ply woven textile of the present invention; and
FIG. 4 is a schematic view illustrating the arrangement of a warp yarn and a weft yarn in the woven textile of FIG. 3 seen from the longer direction of the weft yarn (the direction of arrow I).

MODE FOR CARRYING OUT THE INVENTION

[Woven Textile]

The woven textile of the present invention is a two- or more ply flat woven textile in which a texture A comprising a yarn A and a texture B comprising a yarn B are interwoven. The texture A and the texture B are interwoven such that the longer direction of the yarn A and the longer direction of the yarn B are in the same direction. Namely, the yarn A and the yarn B are both a warp yarn of the woven textile or both a weft yarn of the woven textile.

For the yarn A and the yarn B, shrinkage percentage of the yarn A (SA (%)) and shrinkage percentage of the yarn B (SB (%)) satisfy the relation 10% < (SB - SA) < 60%. When heat is applied to the woven textile, the texture A and the texture B shrink in the longer direction of the yarn A and the yarn B, respectively, and because of such a difference in shrinkage percentage between the yarn A and the yarn B, the texture B comprising the yarn B shrink more than the texture A comprising the yarn A. Consequently, the woven textile bends such that the longer direction of the yarn A and the yarn B is the circumferential direction and the texture A is located outside the texture B. Then, upon heating under appropriate conditions, the woven textile is formed into a tube in which one end and the opposite end of the woven textile overlap each other on the circumference. When the tube is long in the longer direction, a flexible tube made of the woven textile is provided. The  overlapping portion of the woven textile is not adhered; thus, it can be separated to form a gap if a slight force is applied, and the gap will close spontaneously if the force is released. For example, the overlapping portion is opened by hand, and wires are placed into the tube through the gap. If the hand is released, the tube returns to the original tube without a gap, so that the wires will not be exposed outside the tube. Thus, the tube formed from the woven textile of the present invention can be suitably used as a protective sleeve for a wire harness. The overlapping portion need not overlap with no gap being formed, and may overlap with a gap through which the wires will not come out being formed.

For using as an electricity protective sleeve, the amount of overlap on the circumference of the woven textile need to be appropriate, and, for that purpose, it is important that shrinkage percentage of the yarn A (SA (%)) and shrinkage percentage of the yarn B (SB (%)) satisfy the relation 10% < (SB - SA) < 60%. When the difference in shrinkage percentage is less than 10%, even if heat is applied to the woven textile, the amount of overlap is too small, resulting in an electricity protective sleeve from which wires are easily exposed. On the other hand, when the difference in shrinkage percentage is not less than 60%, even if the heating conditions are mild, the amount of overlap is too large to easily open a gap for inserting wires, resulting in an electricity protective sleeve with poor operability. The lower limit of the difference in shrinkage percentage is preferably 15% or more, and the upper limit is preferably 50% or less.

The shrinkage percentage of a yarn in the present invention is a value measured according to JIS L 1013 8.18, Section (1) Hot-water shrinkage percentage B method (filament shrinkage percentage). First, a yarn with an initial load being applied is marked at two points with a distance between points of 500 mm. Next, the initial load is unloaded, and the yarn is immersed in water at 90°C for 30 minutes, after which the water is lightly wiped off with absorbent paper or a cloth, and the yarn is dried by wind. The initial load is applied again, and the distance between the two points is measured. Then, the shrinkage percentage (%) is calculated from the following equation. For five randomly selected yarns, the shrinkage percentage is calculated, and the average of the five values is rounded to one decimal place. The average value obtained is the shrinkage percentage of a yarn in the present invention:

$$\text{Shrinkage percentage } (\%) = (500 - \text{Length between two points (mm)}$$

$$\text{measured when an initial load is applied after treating with hot water)}/500 \times 100.$$

The woven textile of the present invention may be a three- or more ply woven textile in which a texture other than the texture A and the texture B is interwoven as long as the woven textile is not prevented from bending when heat is applied. Such a texture may be interwoven into any places outside the texture A, outside of the texture B, or between the texture A and the texture B. However, from an economic standpoint, a two-ply woven textile in which only the texture A and the texture B are interwoven is preferred.

[Yarn A, Yarn B]

As a material of the yarn A and the yarn B, any yarn that satisfies the relation of shrinkage percentage mentioned above can be used, and synthetic fibers are suitably used. Among the synthetic fibers, polyester is preferably used. For the form of the yarn, a textured yarn, a multifilament yarn, a monofilament yarn, and the like are used. Among them, a textured yarn such as a single-heater false-twisted polyester yarn is preferred in view of formability and low cost.

The yarn A is preferably made of continuous fibers with a single-yarn fiber diameter of 10 to 1000 μm. When

the single-yarn fiber diameter is out of this range, the woven textile sometimes cannot be formed into a tube even if the relation of the difference in shrinkage percentage from the yarn B is satisfied. In view of shape stability, formability, and the like, the lower limit of the single-yarn fiber diameter of the yarn A is preferably 150 $\mu$m or more, and the upper limit is preferably 600 $\mu$m or less.

The shrinkage percentage of the yarn A is preferably 1 to 55%. When the shrinkage percentage is in the range of 1 to 55%, excellent formability and shape stability are provided. The lower limit of the shrinkage percentage is more preferably 2% or more, and the upper limit is more preferably 35% or less.

The total fineness of the yarn A is preferably 60 to 600 dtex. When the total fineness is in this range, shape stability and protectability improve.

The method for obtaining the yarn A is not particularly limited, and, for example, in the case of polyester, the yarn A can be obtained by setting the take-up speed in spinning at about 2000 to 7000 m/min.

The yarn B preferably has a single-yarn fiber diameter of 3 to 500 $\mu$m. When the single-yarn fiber diameter is out of this range, the woven textile surface is distorted, which can cause inefficient wiring operation and the like.

The shrinkage percentage of the yarn B is preferably 10 to 65%. When it is in this range, a woven textile having good formability and, further, good shape stability can be obtained.

The method for obtaining the yarn B is not particularly limited, and, for example, in the case of polyester, the yarn B can be obtained by employing low-speed taking up at a take-up speed in spinning of 1000 to 2000 m/min or using an unstretched yarn or a thick and thin yarn.

[Nap-Raised Texture]

In the woven textile of the present invention, it is preferred that a texture like a nap-raised velvet be interwoven into the outermost surface. If a nap-raised texture is interwoven into the outermost surface, scratch-resisting property and heat-resisting property can be improved when the woven textile of the present invention is used for a protective sleeve for a wire harness. The nap-raised portion may be cut or uncut pile. For the nap-raised portion, it is preferable to use a multifilament with a single-yarn fiber diameter of 80 to 800 $\mu$m in order to maintain rigidity. The nap-raised portion may be formed either by a warp yarn or by a weft yarn. Further, the nap-raised texture may be provided on the surface that is located outside the tube (outside of the texture A) or the surface that is located inside the tube (outside of the texture B) when the woven textile is formed into a tube. When provided on the surface that is located outside the tube, heat generation caused by contact between protective sleeves can be reduced. When provided on the surface that is located inside the tube, the function of protecting lead wires placed in a tube improves.

[Lowest Melting Point Fiber]

In the woven textile of the present invention, when the melting point of the fiber with the lowest melting point (hereinafter referred to as the lowest melting point fiber) and the fiber with the second lowest melting point among the fibers used for a warp yarn or a weft yarn is taken as TC (°C) and TD (°C), respectively, it is preferred that 40°C < (TD - TC) < 150°C be satisfied. By arranging such a lowest melting point fiber, the lowest melting point fiber that melts during heat set is fused with surrounding fibers, and effects of prevention of fraying in cutting of the woven textile, further, improvement of shape stability, and the like can be exerted. The lowest melting point fiber may be arranged either in a warp yarn or a weft yarn.

Examples of the fiber with a low melting point include vinylidene, polyvinyl chloride, nylon, polyethylene, polypropylene, polyurethane, benzoate, and the like, from among which such fibers that satisfy the requirements described above can be selected as appropriate and used.

[PPS Fiber, Meta-Aramid Fiber]

It is also preferred that the woven textile of the present invention contain a polyphenylene sulfide fiber (hereinafter referred to as a PPS fiber) and a meta-aramid fiber in addition to the yarn A and the yarn B in order to provide functions such as heat-resisting property and flame resistance.

[Process for Producing Tubular Woven Textile]

In forming the woven textile of the present invention into a tube by applying heat, the tube is formed such that one end and the opposite end of the woven textile overlap on the circumference of the tube and the length of the overlapping portion in the circumferential direction is 2% or more of the circumferential length. When the overlapping portion accounts for 2% or more, after lead wires are inserted into the tubular woven textile, the lead wires will be protected sufficiently by the woven textile due to the overlap in the circumferential direction. Further, the inserted lead wires will not protrude from the woven textile. The overlapping portion preferably accounts for not more than 13%. If the overlapping portion accounts for more than 13%, lead wires cannot be readily inserted and the operability can be poor.

Examples of the method of forming the woven textile of the present invention into a tube by heat treatment include a method of treatment under such heat treatment conditions that, taking the direction perpendicular to the longer direction of the yarn A and the yarn B as the travel direction, four heat treatment devices are arranged in series in the travel direction; hot air at 90 to 200°C is flown into the heat treatment devices; and the woven textile passes through the heat treatment devices in 30 to 190 seconds.

Alternatively, the woven textile may be protected by heating and shrinking the woven textile in which lead wires are arranged to be formed into a tube.

[Tubular Woven Textile]

When the woven textile of the present invention is a two-ply woven textile, the tubular woven textile formed may be a tubular woven textile wherein the length of the yarn A (LA) and the length of the yarn B (LB) in the tubular state satisfy 10% < $\{$(LA - LB)/LA$\} \times$ 100 < 60%. Namely, it is a tubular woven textile formed in such a manner that a flat two-ply woven textile in which a front surface texture and a back surface texture are interwoven is rolled up such that the front surface texture is located outside, wherein one end and the opposite end of the two-ply woven textile separably overlap each other on the circumference of the tube, and, in the tubular state, the circumferential length of the yarn arranged in the front surface texture (LE) and the circumferential length of the yarn arranged in the back surface texture (LF) satisfy 10% < $\{$(LA - LB)/LA$\} \times$ 100 < 60%. The lower limit of "$\{$(LA - LB)/LA$\} \times$ 100" is preferably 20% or more, and the upper limit is preferably 60% or less.

The circumferential length of the yarn arranged in the front surface texture (LA) is a value determined by randomly selecting five circumferential full-width yarns arranged in the front surface texture and rounding the average value thereof to one decimal place. The circumferential length of the yarn arranged in the back surface texture (LB) is a value determined in the same manner.

[Protective Sleeve for Wire Harness]

The woven textile of the present invention can be readily formed into a tube, and the tubular woven textile formed has excellent softness flexibility and operability. Further, the woven textile can be provided with shape stability by arranging the lowest melting point fiber that satisfies particular temperature conditions. Furthermore, the woven textile can be readily provided with functions such as heat-resisting property and flame resistance by arranging a PPS fiber or a meta-aramid fiber. Therefore, the woven textile of the present invention exerts an extremely excellent effect when used particularly as a protective sleeve for a wire harness.

The thickness of the woven textile of the present invention may be determined depending on the scratch-resisting protection performance required when used as a protective sleeve for a wire harness, and the higher the protection performance required is, the thicker the woven textile is. For example, in the case of a wire harness pathway that requires high protection performance, the woven textile preferably has a gray fabric thickness of 0.5 to 2.0 mm.

EXAMPLES

The woven textile of the present invention will now be described in more detail by way of example. A needle loom was used as a loom to perform weaving.

(Example 1)

As a warp yarn, single-heater false-twist textured polyester yarns of 330 dtex and 167 dtex was used. As a weft yarn, a yarn obtained by drawing together three polyester filaments of 90 dtex with a shrinkage percentage of 15.3% and a polyester monofilament with a shrinkage percentage of 2.0% and a single-yarn fiber diameter of 250 μm were used. The weft yarn obtained by drawing together three polyester filaments is the yarn B (hereinafter referred to as the weft yarn B), and the weft yarn of a polyester monofilament is the yarn A (the weft yarn A). These warp yarn and weft yarn were used to weave a two-ply woven textile with a warp yarn density = 154 yarns/2.54 cm, a weft yarn beat-up density of 22 yarns/cm, and a gray fabric width of 25.5 mm.

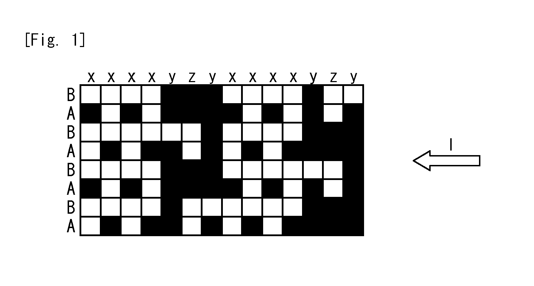

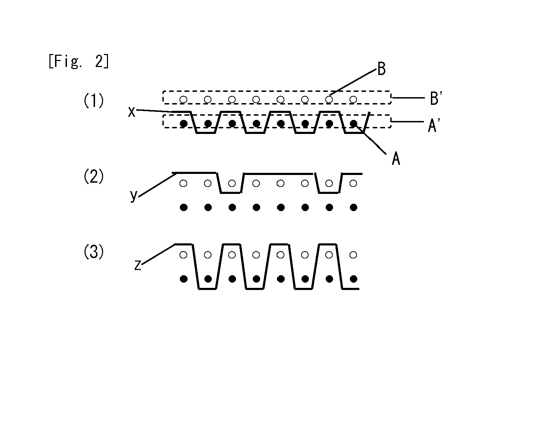

The construction of the two-ply woven textile woven is shown in FIGS. 1 and 2. In each Figure, A and B each represents a weft yarn, and x, y, and z each represents a warp yarn. A is the weft yarn A; B is the weft yarn B; x and y are a single-heater textured polyester yarn of 330 dtex; and z is a single-heater textured polyester yarn of 167 dtex. A' is the texture A comprising the weft yarn A, and B' is the texture B comprising the weft yarn B

FIG. 1 is a weaving design that represents on one plane the way the two-ply woven textile is woven. FIG. 2 is a schematic view of the woven textile represented by the weaving design of FIG. 1 seen from the longer direction of the weft yarn (the direction of arrow I), and (1), (2), and (3) each shows how the warp yarns x, y, and z are beaten up into the weft yarns A and B.

How to appreciate FIG. 1 is briefly described. The leftmost "BABABABA" indicates that the texture comprising the weft yarn B is located at the front of the page and the texture comprising the weft yarn A is located at the back of the page. The uppermost "xxxxyzy..." indicates that the warp yarns x, y, and z are beaten up in the order mentioned. A white cell indicates that, at that part, the warp yarn is located at the back of the page compared to the weft yarn, and a black cell indicates that, at that part, the warp yarn is located at the front of the page compared to the weft yarn. Now looking at every two-cell combination from top to bottom in the warp yarn direction, "(weft yarn B) white cell, (weft yarn A) black cell" indicates that a warp yarn is located at the back of the page compared to the weft yarn B and the front of the page compared to the weft yarn A, that is, between the weft yarn B and the weft yarn A. "(Weft yarn B) white cell, (weft yarn A) white cell" indicates that a warp yarn is located at the back of the page compared to the weft yarn B and the back of the page compared to the weft yarn A, that is, at the back of the woven textile on the page. "(Weft yarn B) black cell, (weft yarn A) black cell" indicates that a warp yarn is located at the front of the page compared to the weft yarn B and the front of the page compared to the weft yarn A, that is, at the front of the woven textile on the page. In other words, FIG. 1 is a plan view illustrating each pattern of beating up of a warp yarn shown in FIG. 2.

(Example 2)

A two-ply woven textile was woven in the same manner as in Example 1 except using as the weft yarn B a yarn obtained by drawing together three polyester filaments of 90 dtex with a shrinkage percentage of 20.5% and as the weft yarn A a polyester monofilament with a shrinkage percentage of 6.7% and a single-yarn fiber diameter of 250 $\mu$m.

(Example 3)

A two-ply woven textile was woven in the same manner as in Example 1 except using as the weft yarn B a yarn obtained by drawing together three polyester filaments of 90 dtex with a shrinkage percentage of 49.3% and as the weft yarn A a polyester monofilament with a shrinkage percentage of 2.0% and a single-yarn fiber diameter of 250 $\mu$m.

(Example 4)

A two-ply woven textile was woven in the same manner as in Example 1 except using as the weft yarn B a yarn obtained by drawing together three polyester filaments of 90 dtex with a shrinkage percentage of 60.8% and as the weft yarn A a polyester monofilament with a shrinkage percentage of 2.0% and a single-yarn fiber diameter of 250 $\mu$m.

(Example 5)

A two-ply woven textile was woven in the same manner as in Example 3 except using as the weft yarn B a yarn obtained by drawing together three polyester filaments of 90 dtex with a shrinkage percentage of 49.3% (melting point: 255°C) and one low melting point fiber of 100 dtex with a melting point of 110°C "Elder" (available from TORAY INDUSTRIES, INC.). A tube that prevents fraying of yarns in inserting wires or cutting the woven textile and has further improved shape stability could be provided.

(Example 6)

As a warp yarn, a single-heater false-twist textured polyester yarn of 330 dtex was used. As a weft yarn, a yarn obtained by drawing together three polyester filaments of 90 dtex with a shrinkage percentage of 49.3% and a polyester monofilament with a shrinkage percentage of 2.0% and a single-yarn fiber diameter of 250 $\mu$m were used. The weft yarn obtained by drawing together three polyester filaments is the yarn B (hereinafter referred to as the weft yarn B), and the weft yarn of a polyester monofilament is the yarn A (the weft yarn A). These warp yarn and weft yarn were used to weave a two-ply woven textile with a warp yarn density = 154 yarns/2.54 cm, a weft yarn beat-up density of 22 yarns/cm, and a gray fabric width of 25.5 mm.

Further, as a pile fabric, a texture using as a warp yarn a single-heater false-twist textured polyester yarn of 330 dtex, as a pile a polyester filament of 560 dtex, and as a weft yarn a single-heater false-twist textured polyester yarn of 330 dtex was produced, and the polyester filament arranged as a pile was cut to obtain a nap-raised portion.

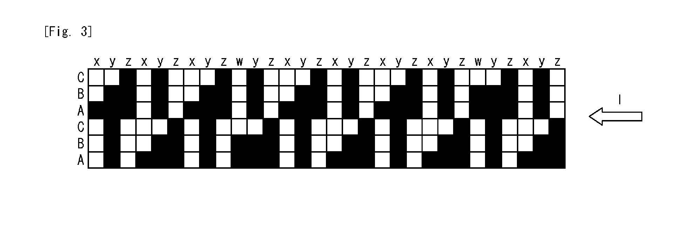

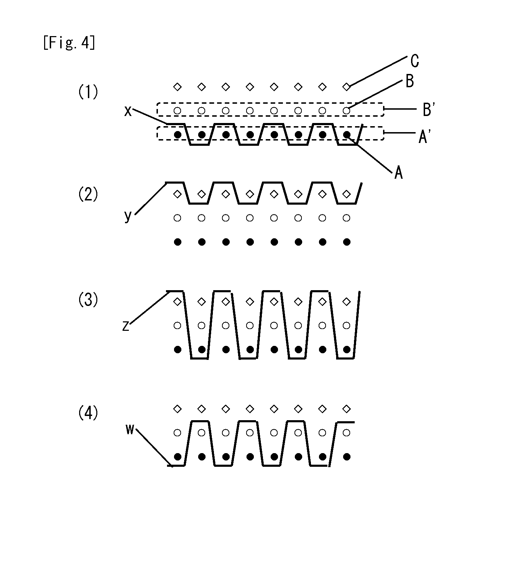

Thus, a three-ply (including the pile fabric) woven textile was woven. The construction of the three-ply woven textile woven is shown in FIGS. 3 and 4. In each Figure, A, B, and C each represents a weft yarn, and x, y, and w each represents a warp yarn. A is the weft yarn A; B is the weft yarn B; C is the single-heater textured polyester yarn of 330 dtex arranged as a weft yarn to produce a pile fabric; x, y, and z are all a single- heater textured polyester yarn of 330 dtex; and z is the polyester filament of 560 dtex arranged as a pile.

FIG. 3 is a weaving design that represents on one plane the way the two-ply woven textile is woven. FIG. 4 is a schematic view of the woven textile represented by the weaving design of FIG. 3 seen from the longer direction of the weft yarn (the direction of arrow I), and (1), (2), (3), and (4) each shows how the warp yarns x, y, z, and w are beaten up into the weft yarns A, B, and C. How to appreciate FIG. 3 is the same as how to appreciate FIG. 1, and thus detailed descriptions are omitted. It should only be noted that the texture comprising the weft yarn C is located at the frontmost of the page; the texture comprising the weft yarn A is located at the backmost of the page; the texture comprising the weft yarn B is located between these two textures; and every three-cell combination is looked from top to bottom in the warp yarn direction.

(Example 7)

A two-ply woven textile was woven in the same manner as in Example 3 except using as a warp yarn a polyphenylene sulfide fiber of 330 dtex and 167 dtex. x and y in FIGS. 1 and 2 are polyphenylene sulfide fibers of 330 dtex, and z is a polyphenylene sulfide fiber of 167 dtex.

(Comparative Example 1)

A two-ply woven textile was woven in the same manner as in Example 1 except using as the weft yarn B a yarn obtained by drawing together three polyester filaments of 90 dtex with a shrinkage percentage of 11.3% and as the weft yarn A a polyester monofilament with a shrinkage percentage of 2.0% and a single-yarn fiber diameter of 250 $\mu$m.

(Comparative Example 2)

A two-ply woven textile was woven in the same manner as in Example 1 except using as the weft yarn B a yarn obtained by drawing together three polyester filaments of 90 dtex with a shrinkage percentage of 66.1 % and as the weft yarn B a polyester monofilament with a shrinkage percentage of 2.0% and a single-yarn fiber diameter of 250 $\mu$m.

(Comparative Example 3)

Using the same warp yarn and weft yarn as in Example 3, a single-ply woven textile of plain construction with a warp yarn density = 154 yarns/2.54 cm, a beat-up density 22 times/cm, and a gray fabric width of 25.5 mm was woven.

(Comparative Example 4)

Using the same warp yarn and weft yarn as in Example 3, a single-ply woven textile of 2/2 twill construction with a warp yarn density = 154 yarns/2.54 cm, a beat-up density 22 times/cm, and a gray fabric width of 25.5 mm was woven.

[Evaluation]

From the woven textiles woven in Examples 1 to 7 and Comparative Examples 1 to 4, samples with a length (in the warp yarn direction) of 1000 mm and a width (in the weft yarn direction) of 25.5 mm were collected. Each sample was left to stand in a heat treatment device at 160°C for 50 seconds. The shape of the woven textile after the heat treatment is shown in Table 1.

Table 1

| | Shrinkage Percentage of Weft Yarn B (%) | Shrinkage Percentage of Weft Yarn A (%) | Difference in Shrinkage Percentage (%) | Fabric Construction | Overlap in Circumferential Direction (%) | Percentage of Yarn Length Difference (%) |
|---|---|---|---|---|---|---|
| Example 1 | 15.3 | 2.0 | 13.3 | Two-ply shown in FIGS. 1 and 2 | 2.4 | 12.3 |
| Example 2 | 20.5 | 6.7 | 13.8 | Two-ply shown in FIGS. 1 and 2 | 2.8 | 14.3 |
| Example 3 | 49.3 | 2.0 | 47.3 | Two-ply shown in FIGS. 1 and 2 | 8.5 | 32.6 |
| Example 4 | 60.8 | 2.0 | 58.8 | Two-ply shown in FIGS. 1 and 2 | 11.7 | 53.3 |
| Example 5 | 49.3 | 2.0 | 47.3 | Two-ply shown in FIGS. 1 and 2 | 8.8 | 32.6 |
| Example 6 | 49.3 | 2.0 | 47.3 | Three-ply shown in FIGS. 3 and 4 | 8.8 | (32.6) |
| Example 7 | 49.3 | 2.0 | 47.3 | Two-ply shown in FIGS. 1 and 2 | 8.8 | 32.6 |
| Comparative Example 1 | 11.3 | 2.0 | 9.3 | Two-ply shown in FIGS. 1 and 2 | 1.3 | 9.2 |
| Comparative Example 2 | 66.1 | 2.0 | 64.1 | Two-ply shown in FIGS. 1 and 2 | 14.7 | 62.2 |
| Comparative Example 3 | 49.3 | 2.0 | 47.3 | Plain fabric | Not overlapped | - |
| Comparative Example 4 | 49.3 | 2.0 | 47.3 | Twill fabric | Not overlapped | - |

"Percentage of yarn length difference" is a value of {(Length of weft yarn A - Length of weft yarn B)/Length of weft yarn A} × 100 for both of the two-ply woven textiles and the three-ply woven textile. The woven textile in Example 6 is a three-ply, and thus the "percentage of yarn length difference" is described as a reference value because it is not a percentage of yarn length difference between the weft yarn of a front surface texture and the weft yarn of a back surface texture.

Further, ease of operation (operability) in actually inserting lead wires into a woven textile and whether the shape of the woven textile was retained after the insertion operation (shape stability) were examined.

The woven textile in Example 1 was formed into a tube having an overlap in the circumferential direction. However, it had low bendability because of somewhat small difference in shrinkage percentage between the weft yarn A and the weft yarn B. Therefore, the woven textile sometimes did not overlap successfully during the operation of inserting lead wires, and the shape stability was somewhat insufficient. Accordingly, it was necessary to carry out the operation while adjusting the woven textile to overlap the way it was, and the operability was also somewhat insufficient.

The woven textiles in Examples 2 to 7 were all a tube having a sufficient overlap in the circumferential direction and preferred as a protective sleeve for a wire harness. In addition, it was easy to open the overlapping portion to form a gap, and an operation of inserting lead wires could be easily performed. Further, because the tube overlaps the way it was when hands were released, the shape stability was excellent and the wire protectability after the operation was sufficient.

In addition, the woven textiles in Examples 5 to 7 also had characteristics as follows:

The woven textile in Example 5 provided a protective sleeve for a wire harness having particularly good shape stability and operability compared to the woven textile in Example 3 because the low melting point fiber arranged in the woven textile melted and fused with surrounding fibers;

The woven textile in Example 6 was a tube with pile fabric interior, and the nap-raised portion improved lead-wire protection performance; and

The woven textile in Example 7 had an improved heat-resisting property and flame resistance because a polyphenylene sulfide fiber was used as a warp yarn.

In contrast, the woven textile in Comparative Example 1 provided an irregular tube after heat treatment. In addition, the overlap in the circumferential direction disappeared after the operation of inserting lead wires, and there was a problem in protectability for lead wires. Therefore, the inserted lead wires protruded externally, and the operability was poor.

The woven textile in Comparative Example 2 was a tube having a sufficient overlap in the circumferential direction, but because of too large overlap in the circumferential direction, it was difficult to open the overlapping portion to form a gap. Thus it was difficult to carry out the operation of inserting lead wires. In addition, because of the large overlapping portion, it was a tube lacking in softness.

The woven textiles in Comparative Example 3 and 4 were not formed into a tube and could not protect lead wires.

DESCRIPTION OF SYMBOLS

A: Yarn A (Weft yarn A)
B: Yarn B (Weft yarn B)
A': Texture A comprising yarn A
B': Texture B comprising yarn B
x, y, z, and w: Warp yarn

**Claims**

1. A two- or more ply flat woven textile in which a texture A comprising a yarn A and a texture B comprising a yarn B are interwoven,
wherein said yarn A and said yarn B are both a warp yarn or both a weft yarn; shrinkage percentage of said yarn A (SA (%)) and shrinkage percentage of said yarn B (SB (%)) satisfy Relation (1); and
said woven textile, when heat is applied thereto, is formed into a tube such that the longer direction of said yarn A and said yarn B is the circumferential direction and said texture A is located outside said texture B:

$$10\% < (SB - SA) < 60\% \qquad (1).$$

2. The woven textile according to claim 1, wherein a nap-raised texture is interwoven into at least one surface of said woven textile.

3. The woven textile according to claim 1 or 2, wherein said yarn A is continuous fibers with a single-yarn fiber diameter 10 to 1000 $\mu$m.

4. The woven textile according to any one of claims 1 to 3, wherein among fibers used for the warp yarn or the weft yarn of the woven textile, the melting point of the fiber with the lowest melting point TC (°C) and the melting point of the fiber with the second lowest melting point TD (°C) satisfy Relation (2):

$$40°C < (TD - TC) < 150°C \quad (2)$$

**5.** The woven textile according to any one of claims 1 to 4, wherein a polyphenylene sulfide fiber and/or a meta-aramid fiber are further interwoven in addition to said yarn A and said yarn B.

**6.** The woven textile according to any one of claims 1 to 5, which is used as a protective sleeve for a wire harness.

**7.** A process for producing a tubular woven textile,
wherein heat is applied to the woven textile according to any one of claims 1 to 6, so that said woven textile spontaneously rolls up due to the difference in shrinkage percentage between said yarn A and said yarn B to form a tube;
the longer direction of said yarn A and said yarn B is the circumferential direction of the tube;
said texture A is located outside said texture B; and
one end and the opposite end of said woven textile separably overlap each other on the circumference of the tube, wherein the length of the overlapping portion in the circumferential direction is 2% or more of the circumferential length.

**8.** The process for producing a tubular woven textile according to claim 7, wherein said tubular woven textile is a protective sleeve for a wire harness.

**9.** A tubular woven textile formed in such a manner that a flat two-ply woven textile in which a front surface texture and a back surface texture are interwoven is rolled up such that the front surface texture is located outside, wherein one end and the opposite end of said two-ply woven textile separably overlap each other on the circumference of the tube; and
in said tubular state, the circumferential length of a yarn arranged in said front surface texture (LA) and the circumferential length of a yarn arranged in said back surface texture (LB) satisfy Relation (2):

$$10\% < \{(LA - LB)/LA\} \times 100 < 60\% \qquad \text{Relation (2).}$$

**10.** A protective sleeve for a wire harness, which uses the tubular woven textile according to claim 9.

[Fig. 1]

[Fig. 2]

(1)

(2)

(3)

[Fig. 3]

[Fig.4]

(1)

(2)

(3)

(4)

## INTERNATIONAL SEARCH REPORT

| | International application No. |
|---|---|
| | PCT/JP2011/076903 |

A. CLASSIFICATION OF SUBJECT MATTER
*D03D11/00*(2006.01)i, *D03D3/02*(2006.01)i, *D03D25/00*(2006.01)i, *H01B17/58*
(2006.01)i

According to International Patent Classification (IPC) or to both national classification and IPC

B. FIELDS SEARCHED

Minimum documentation searched (classification system followed by classification symbols)
D03D1/00-27/18

Documentation searched other than minimum documentation to the extent that such documents are included in the fields searched
    Jitsuyo Shinan Koho       1922-1996   Jitsuyo Shinan Toroku Koho   1996-2012
    Kokai Jitsuyo Shinan Koho  1971-2012   Toroku Jitsuyo Shinan Koho   1994-2012

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2009/111253 A2 (FEDERAL-MOGUL POWERTRAIN, INC.), 09 November 2009 (09.11.2009), paragraph [0018] & US 2009/0218002 A1 & EP 2250304 A | 1-10 |
| A | JP 8-226044 A (Nihon Widecloth Co., Ltd.), 03 September 1996 (03.09.1996), entire text (Family: none) | 1-10 |
| A | JP 3104242 U (Takenori IJIMA), 16 September 2004 (16.09.2004), claims (Family: none) | 1-10 |

| ☒ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 13 January, 2012 (13.01.12) | 24 January, 2012 (24.01.12) |

| Name and mailing address of the ISA/ | Authorized officer |
|---|---|
|    Japanese Patent Office | |
| Facsimile No. | Telephone No. |

Form PCT/ISA/210 (second sheet) (July 2009)

**INTERNATIONAL SEARCH REPORT**

International application No.

PCT/JP2011/076903

C (Continuation). DOCUMENTS CONSIDERED TO BE RELEVANT

| Category* | Citation of document, with indication, where appropriate, of the relevant passages | Relevant to claim No. |
|---|---|---|
| A | Microfilm of the specification and drawings annexed to the request of Japanese Utility Model Application No. 38557/1990(Laid-open No. 682/1992)<br>(Shinagawa Shoko Co., Ltd.),<br>07 January 1992 (07.01.1992),<br>entire text<br>(Family: none) | 1-10 |
| A | Microfilm of the specification and drawings annexed to the request of Japanese Utility Model Application No. 152808/1989(Laid-open No. 88462/1991)<br>(Toyo Chemical Co., Ltd.),<br>10 September 1991 (10.09.1991),<br>entire text<br>(Family: none) | 1-10 |
| A | JP 53-49862 A (Kiichi TANAKA),<br>06 May 1978 (06.05.1978),<br>entire text<br>(Family: none) | 1-10 |

Form PCT/ISA/210 (continuation of second sheet) (July 2009)

**INTERNATIONAL SEARCH REPORT**

International application No.

PCT/JP2011/076903

| Box No. II      Observations where certain claims were found unsearchable (Continuation of item 2 of first sheet) |
|---|

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| Box No. III      Observations where unity of invention is lacking (Continuation of item 3 of first sheet) |
|---|

This International Searching Authority found multiple inventions in this international application, as follows:

```
   Although the matter common to the invention of claims 1-8 and the inventions
of claims 9 and 10 is present in a point which is relevant to planar double
textile forming a cylindrical fabric, said feature is disclosed in JP 3104242
U (Takenori IJIMA), 16 September 2004 (16.09.2004), claims and so on and does
not make a contribution over the prior art, and therefore cannot be considered
to be a special technical feature within the meaning of PCT Rule 13.2, second
sentence.
                                            (continued to extra sheet)
```

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

| International application No. |
| --- |
| PCT/JP2011/076903 |

Continuation of Box No.III of continuation of first sheet(2)

Further, since there is no other common matter, which is considered to be a special technical feature, between the inventions of claims 1-8 and the inventions of claims 9 and 10, any technical relationship within the meaning of PCT Rule 13 cannot be found among those different inventions.
Consequently, the inventions of claims 1-8 and the inventions of claims 9 and 10 do not comply with the requirement of unity of invention.

Form PCT/ISA/210 (extra sheet) (July 2009)

**EP 2 647 749 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6070425 A
- JP 2007297749 A
- WO 2009111253 A